# EUROPÄISCHE PATENTSCHRIFT

(11) **EP 1 058 327 B1**
(45) Veröffentlichungstag und Bekanntmachung des Hinweises auf die Patenterteilung: **23.06.2010**
(21) Anmeldenummer: 00109300.4
(22) Anmeldetag: 29.04.2000
(51) Int. Cl.: H01M 4/62, H01M 4/02

(54) **Negative Elektrode für Hochenergie-Lithium-Ionen-Zellen und ein Verfahren zu ihrer Herstellung**
Negative electrode for high energy lithium ion cell and method for manufacturing the same
Electrode négative pour cellule lithium ion à énergie élevée et procédé de fabrication

(30) Priorität: 04.06.1999 DE 19925683
(43) Veröffentlichungstag der Anmeldung: 06.12.2000
(73) Patentinhaber: Johnson Controls Hybrid and Recycling GmbH, 30419 Hannover (DE)
(72) Erfinder: Koy, Jürgen, 60326 Frankfurtt (DE); Metz, Bernhard, Dr., 65779 Kelkheim (DE); Wagner, Roland, 63322 Rödermark (DE); Bechtold, Dieter, 61118 Bad Vilbel (DE)
(74) Vertreter: Lins, Edgar

(56) Entgegenhaltungen:
- EP-A- 0 603 397
- WO-A-99/19917
- US-A- 5 262 255
- US-A- 5 824 120
- PATENT ABSTRACTS OF JAPAN Bd. 011, Nr. 088 (E-490), 18. März 1987 (1987-03-18) & JP 61 240579 A (JAPAN STORAGE BATTERY CO LTD), 25. Oktober 1986 (1986-10-25)

## Beschreibung

Die Erfindung betrifft eine negative Elektrode für Hochenergie-Lithium-Ionen-Zellen, bestehend aus einer eine lithiuminterkalierende Verbindung, ein Leitmittel sowie ein polymers Bindemittel enthaltenden Elektrodenmasse auf einem metallischen Trägersubstrat sowie deren Herstellung.

Solche Zellen enthalten lithiumhaltige Metalloxide der Metalle Mn, Ni, Cr, Co oder Mischoxide dieser Metalle als Kathodenmaterial im Gemisch mit Bindemitteln wie z.B. Fluorpolymeren, vorzugsweise Polytetrafluorethylen (PTFE) oder deren Dispersionen und Leitmitteln (Ruße, Graphite) (JP-A-236258/1988, US 5,707,763), die auf metallische Ableitermaterialien aufgebracht werden. Als aktive Anodenmaterialien werden verschiedene Kohlenstofftypen eingesetzt. Diese werden als Gemisch mit Bindemitteln und ggf. Leitmaterialien auf einen metallischen Träger mit Hilfe einer Beschichtungseinrichtung (siehe EP 0 710 995 A2 oder DE 196 33 463 A1) aufgebracht. Dokument WO 97/32347 offenbart als Bindemittel zur Fixierung der aktiven Materialien auf dem metallischen Trägermaterial Fluorpolymere wie Polyvinylidendifluorid (PVDF) oder PVDF/Acrylat-Propfpolymere.

Aus dem Dokument WO 97/15087 ist ein Herstellungsverfahren von Anoden für eine Hochenergiezelle bekannt, bei dem die Eintragung der Kohlenstoffmassen in poröse Nickelträgermaterialien, vorzugsweise Ni-Foam erfolgt. Solche Ni-Foam Substrate werden dadurch erhalten, daß man zunächst Polyurethan-Schäume im Argonplasma vorvernickelt, dann aus einer Salzlösung (Sole) metallisches Nickel abscheidet und schließlich das Polyurethan unter Anwendung hoher Temperaturen (ca. 800-1000°C) zersetzt.

Das US-Patent 5,262,255 beschreibt Negativelektroden für wiederaufladbare Akkumulatoren. Das Herstellungsverfahren von entsprechenden Anoden umfasst die Verwendung von Bindemitteln, z.B. Methylmethacrylat-Butadien-Copolymer oder anderen bekannten polymeren Bindemitteln.

Dokument EP 0 603 397 beschreibt negative Elektroden von Lithiumsekundärbatterien mit organischem Polymer als Bindemittel.

Große Hochenergiezellen in prismatischer Bauform oder als Rundzelle mit Energieinhalten von 6 bis 80 Ah, die lithiumhaltige Me-Oxide als Kathodenmaterial und Kohlenstoff als Anodenmaterial (Lithium-lonen-Zellen) enthalten, sind vorwiegend für den Einbau in Satelliten und in Batterien für Elektrostraßenfahrzeuge vorgesehen.

Diese Zelltypen zeichnen sich dadurch aus, daß sie einen vergleichsweise niedrigen Anteil an chemisch inaktiven metallischen Ableitern besitzen und dadurch eine hohe Energiedichte der Zelle von 100-120 Wh/kg (Leistungsdichte 185 W/kg) aufweisen.

Hochenergiezellen enthalten im allgemeinen pastierte Ni-Foam-Kohlenstoffanoden, die einen geringen Abstand der aktiven Materialien zum metallischen Ableiter aufweisen. Diese Charakteristik ist mit dafür verantwortlich, daß eine Entladbarkeit der Elektroden respektive der damit hergestellten Zellen mit Strömen von C/20 (Formationsstrom) bis 5 C möglich ist. Unter 1C wird dabei die Stromstärke verstanden, die theoretisch für die vollständige Entladung der maximalen Zellenkapazität innerhalb einer Stunde notwendig ist.

Die Erfindung hat sich die Aufgabe gestellt, negative Elektroden für Hochenergie-Lithium-Ionen-Zellen sowie ein Verfahren zu deren Herstellung anzugeben.

Die Aufgabe wird erfindungsgemäß durch die gattungsgemäß angegebenen Elektroden mit den kennzeichnenden Merkmalen gemäß Anspruch 1 gelöst.

Weitere vorteilhafte Ausgestaltungen der Elektroden sind in den Ansprüchen 2 bis 10 dargelegt.
Das erfindungsgemäße Verfahren zur Herstellung der erfindungsgemäßen Elektroden ist in Anspruch 11 angegeben.

Es wurde gefunden, daß die Verwendung von Cu-Streckmetall und Lochblechen in Verbindung mit chemisch indifferenten Additiven und Bindemitteln zu einer besseren Zellperformance bei den oben genannten Zelltypen führt. Auch die erfolgreiche Anwendung der entsprechenden Materialien für hochbelastbare Zellen (Hochleistungszellen) im Bereich Li-Ion konnte nachgewiesen werden. Darüber hinaus ist es nach dem erfindungsmäßen Verfahren nicht unbedingt erforderlich, aufwendigen Nickelfoam einzusetzen.

In der negativen Elektrode werden Cu-Streckmetall als Ableitermaterial sowie spezielle Polymerbinder und Additive eingesetzt, und es wird eine neue Beschichtungsmethode verwendet.

Die Beschichtung der erfindungsgemäßen Kohlenstoff-Abmischung auf den metallischen Ableiter führt zu einer nachweislich deutlich besseren Haftung beim Biegen der erfindungsgemäß hergestellten Elektrode über einen Dom (∅ 10 mm). Insbesondere ist kein Abblättern der aktiven Masse vom Ableiter feststellbar bei Verwendung des erfindungsgemäßen Polymerbinders X in Verbindung mit dem Additiv Y, wobei X ein Butadieneinheiten enthaltendes polymeres Bindemittel und das Additiv Y ein Latex auf der Basis eines Acrylsäurederivat-Copolymerisats ist.

In einer weiteren Ausgestaltung der Erfindung wird ein Teil der lithiuminterkalierenden Verbindung durch eine Kohlenstoffaser ersetzt.

Im Vergleich zu Anwendungen unter Verwendung von PVDF-Dispersionen als Bindemittel ließ sich der Anteil an elektrochemisch nicht aktiven Substanzen deutlich von 18 auf bis zu 4.5 Gewichtsprozent reduzieren und damit eine Steigerung der Energiedichte auf 115 Wh/kg auf 120 Wh/kg erzielen.

Außerdem führt die Verwendung der erfindungsgemäßen Anoden in Li-Me-Oxid Hochenergie Zellen zu einer um den Faktor 3 besseren Lagerfähigkeit, die sich in einem geringeren irreversiblen Hochtemperatur-Verlust von 2.5 % statt vergleichsweise 12 % im geladenen Zustand bei 60 °C für einen Tag zeigt.

Die Erfindung wird nachfolgend an 4 Beispielen und 3 Vergleichsbeispielen näher dargestellt. Die Ergebnisse sind in Tabelle 1 zusammengefaßt.

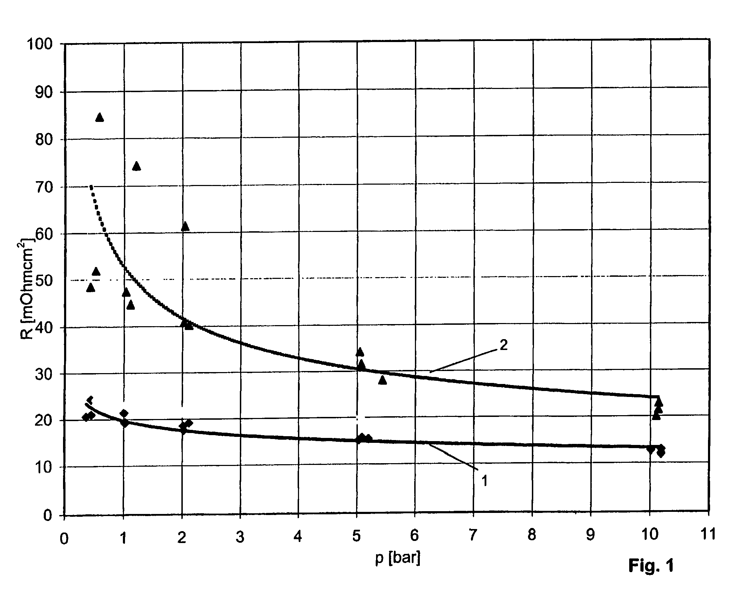

Die Figur 1 zeigt den Vergleich der Werte für den flächenspezifischen Gesamtwiderstand R von negativen Elektroden gemäß Beispiel 4 (Kurve 1) und negativen Elektroden nach dem Stand der Technik (Kurve 2) in Abhängigkeit vom Anpreßdruck p in den Zellen.

### Beispiel 1

### a) Herstellung der Pastiermasse

Ein zur Verbesserung der elektrischen Leitfähigkeit beitragender Ruß (Stoff e) wird mit dem Additiv Y (Stoff c) erfindungsgemäß unter Verwendung eines hochtourigen Mischers 10 min bei RT homogenisiert. Anschließend wird die Masse in VE-Wasser (oder eine andere indifferente Hilfsflüssigkeit/LM) eingetragen und 15 min unter Verwendung eines Dissolvers bei 2500 U/min gemischt bis eine einphasige Suspension vorliegt. Danach wird innerhalb von ca. 20 min der Kohlenstoff (Stoff b) zugegegeben und bei der gleichen Drehzahl gemischt. Nach Vorliegen einer einphasigen pastösen Masse gibt man erfindungsgemäß den Polymerbinder (Stoff X) zu und rührt noch 30 min bei 1500 U/min nach.

| Ausgangsmaterialien | Bezeichnung | Trocken- Gew.-% |
|---|---|---|
| a | VE-Wasser | |
| b | Polymerbinder X | 1,88 |
| c | Additiv Y | 0,70 |
| d | MCMB | 94,36 |
| e | SAB | 3,06 |
| | Summe | 100,00 |

| | | |
|---|---|---|
| a - voll entsalztes Wasser b - Polymerbinder X = Styrol, (61 %) Butadien (25%) Copolymerisat mit 2.5 % Acrylsäure und 1.5 % Acrylamid c - Additiv Y = partiell mit NaOH verseiftes Copolymerisat aus Acrylsäuremethylester und Vinylacetat d - Mesocarbon Microbeads 6 - 28 (Graphit) e - Shawinigan Acetylene Black^{®} (Leitruß) | | |

### b) Beschichtung

Mit Hilfe einer Pastiereinrichtung wird das Cu-Streckmetall erfindungsgemäß von beiden Seiten mit der wäßrigen Paste beschichtet und anschließend das pastierte Band in einem Umluftofen bei einer Durchtrittsgeschwindigkeit von 40 m/h bei 160°C getrocknet. Anschließend wird das Band mit einem Kalander (Walzanlage) auf Endmaß gebracht.

### c) Elektrodenherstellung/Zellenbau

Mit einer Hilfe einer Ultraschallschweißanlage wird an den massefreien Bereich kontinuierlich das Cu-Ableiterband angeschweißt, anschließend werden aus dem so hergestellten Elektrodenband die Elektroden ausgeschnitten (z.B. durch Stanzen oder per Laserschnitt). Danach erfolgt die Trocknung der Anoden bei Vakuum und 60°C, dann die Montage der mit Separator des Typs Celgard 2502 (Fa.Celgard GmbH) eingetaschten Anoden zusammen mit den LiMeOxid-Kathoden. Nach der Endmontage und dem Verschließen werden die Zellen mit Elektrolyt der Zusammensetzung A:B:C im Verhältnis von 2:2:1 befüllt und in Betrieb gesetzt. Eine genaue Beschreibung dieses Verfahrens ist in den Dokumenten DE 197 14 846 A1 dargelegt, deren Inhalt zum Gegenstand der vorliegenden Anmeldung gehört.

### Beispiel 2

### a) Herstellung der Pastiermasse

erfolgt analog dem Beispiel 1 mit dem Unterschied, daß die nachfolgenden Substanzen verwendet wurden:
b - Polymerbinder X = Styrol, (61%) Butadien (25%) Copolymerisat mit 2.5 % Acrylsäure und 1.5 % Acrylamid
c - Additiv Y = Copolymerisat aus Vinylpyrrolidon mit Natriummethacrylat (9:1) entsprechend LuvitecVPMA 91 W^{®}
Die Beschichtung und die Elektrodenherstellung bzw. der Zelllenbau erfolgte analog Beispiel 1.

Die erfindungsgemäßen Polymeren sind Homo- und/oder Copolymerisate, die mindestens 4 Gew.-% (bezogen auf das Molgewicht) ungesättigte Anteile enthalten z.B. Isobutylkautschuk, aber auch Polybutadien oder Polyisoprenöle, die reine Diolefin - Homopolymerisate sein können. Die Herstellung der beschriebenen Polymeren ist nicht Gegenstand dieser Erfindung, sondern aus der Fachliteratur ersichtlich (Saechtling, Kunststoffhandbuch 27. Auflage, 1998 Karl Hanser Verlag, München).

### Beispiel 3

### a) Herstellung der Pastiermasse

erfolgt analog dem Beispiel 1 mit dem Unterschied, daß die nachfolgenden Substanzen verwendet wurden:
b - Polymerbinder X = Polybutadienöl Vinylanteil 25 %, Molgewicht 12.000 - 14.000
c - Additiv Y = partiell mit NaOH verseiftes Copolymerisat aus Acrylsäuremethylester und Vinylacetat
Die Beschichtung und die Elektrodenherstellung bzw. der Zelllenbau erfolgte analog Beispiel 1.

### Beispiel 4

| Ausgangsmaterialien | Bezeichnung | Trocken- Gew.-% |
|---|---|---|
| a | VE-Wasser | |
| b | Polymerbinder X | 1,88 |
| c | Additiv Y | 0,70 |
| d | MCMB | 84,37 |
| e | SAB | 3,06 |
| f | C-Fasern | 9,98 |
| | Summe | 100,00 |

| | | |
|---|---|---|
| a - voll entsalztes Wasser b - Polymerbinder X = Styrol, (61 %) Butadien (25%) Copolymerisat mit 2.5 % Acrylsäure und 1.5 % Acrylamid c - Additiv Y = partiell mit NaOH verseiftes Copolymerisat aus Acrylsäuremethylester und Vinylacetat d - Mesocarbon Microbeads 6 - 28 (Graphit) e - Shawinigan Acetylene Black^{®} (Leitruß) f - Kohlenstoffasern (Länge 0,1 - 0,5 mm und Dicke ca. 6 µm) | | |

Die Herstellung der Pastiermasse mit der vorstehend angegebenen Zusammensetzung, die Beschichtung und die Elektrodenherstellung bzw. der Zelllenbau erfolgte analog Beispiel 1.

### Vergleichsbeispiele 1 - 3

Elektroden für Knopfzellen wurden entsprechend dem Dokument DE 196 42 878 (Nr. 1, 2 und 3) hergestellt. Als Bindemittel wurden Polyacrylharze (Nr. 1), Polyethylenoxid (Nr. 2) und Polyisobuten (Nr. 3) eingesetzt.

**Tabelle 1**

| | | Vergleichsbeispiel Nr. | | | Beispiele Nr. | | | |
|---|---|---|---|---|---|---|---|---|
| | | 1 | 2 | 3 | B1 | B2 | B3 | B4 |
| 1. | Spannung, geladener Zustand [V] | 4,0 | 3,8 | 4,0 | 4,3 | 4,3 | 4,3 | 4,1 |
| 2. | Energiedichte [Wh/kg] | ∼ 15 | ∼ 20 | < 16 | 120 | 115 | 115 | 118 |
| 3. | Zyklenstabilität 3.0- 4.5 V, 80 % DOD³⁾ | < 200 | < 200 | < 200 | > 800 | > 600 | > 700 | > 600 |
| 4. | Irreversibler Kapazitätsverlust 60°C, 1 Tag, geladener Zustand (> 4 Volt) [%] | ca. 12 | Ca. 15 | ca. 10 | 2.5¹⁾; 4,0²⁾ | 3.0²⁾; 4,5³⁾ | 2.5²⁾; 4,0³⁾ | 2.5¹⁾ ; 4,0³ |

| | | | | | | | | |
|---|---|---|---|---|---|---|---|---|
| ¹⁾ bei Verwendung von Cu-Streckmetall als metallischen Träger ²⁾ bei Verwendung von Foam als metallischen Träger ³⁾ DOD: Depth of discharge (Tiefe der Entladung) | | | | | | | | |

## Patentansprüche

1. Negative Elektrode für Hochenergie-Lithium-Ionen-Zellen, bestehend aus einer eine lithiuminterkalierenden Verbindung, ein Leitmittel sowie ein polymeres Bindemittel enthaltenden Elektrodenmasse auf einem metallischen Trägersubstrat, **dadurch gekennzeichnet, daß** die Elektrodenmasse ein Latexadditiv auf der Basis eines Acrylsäurederivat-Copolymerisats und ein Butadieneinheiten enthaltendes polymeres Bindemittel enthält.

2. Negative Elektrode nach Anspruch 1, **dadurch gekennzeichnet, daß** die Elektrodenmasse einen Latex auf der Basis eines Copolymerisats von Vinylpyrrolidon mit Natriummethacrylat und ein Styren-Butadien-Copolymerisat als polymeres Bindemittel enthält.

3. Negative Elektrode nach Anspruch 1, **dadurch gekennzeichnet, daß** die Elektrodenmasse einen Latex auf der Basis eines teilverseiften Copolymerisats von Vinylacetat mit einem Acrylsäureester und ein Styren-Butadien-Copolymerisat als polymeres Bindemittel enthält.

4. Negative Elektrode nach Anspruch 1, **dadurch gekennzeichnet, daß** die Elektrodenmasse einen Latex auf der Basis eines teilverseiften Copolymerisats von Vinylacetat mit einem Methylmethacrylat und einem Butadienöl als polymeres Bindemittel enthält.

5. Negative Elektrode nach Anspruch 4, **dadurch gekennzeichnet, daß** der Vinylanteil im Bindemittel unter 25 mol% liegt.

6. Negative Elektrode nach einem der Ansprüche 1 bis 5, **dadurch gekennzeichnet, daß** die Elektrodenmasse 2 bis 5 Gew.% polymeres Bindemittel, 0,5 bis 2 Gew.% Latexadditiv, 2 bis 6 Gew.% Leitmittel und Rest lithiuminterkalierende Verbindung enthält.

7. Negative Elektrode nach einem der Ansprüche 1 bis 6, **dadurch gekennzeichnet, daß** das metallische Trägersubstrat eine Kupferfolie, ein Kupferlochblech oder ein Kupferstreckmetall ist.

8. Negative Elektrode nach einem oder mehreren der Ansprüche 1 bis 7, **dadurch gekennzeichnet, daß** die lithiuminterkalierende Verbindung ein Graphit ist.

9. Negative Elektrode nach Anspruch 8, **dadurch gekennzeichnet, daß** der Graphit 5 bis 15 Gew.% einer Kohlenstoffaser mit einer Länge von 0,1 bis 1 mm und einem Durchmesser von 1 bis 20µm enthält.

10. Negative Elektrode nach einem oder mehreren der Ansprüche 1 bis 9, **dadurch gekennzeichnet, daß** das Masseverhältnis von Graphit und Ruß 1000 : 1 bis 1 : 1 vorzugsweise 50 : 1 bis 25 : 1 beträgt.

11. Verfahren zur Herstellung einer negativen Elektrode nach einem oder mehreren der Ansprüche 1 bis 10, **dadurch gekennzeichnet, daß** der Ruß mit dem Latexadditiv homogenisiert in einem Lösemittel dispergiert sowie mit dem Graphit versetzt und zu einer homogenen Masse verrührt wird und daß erst im letzten Schritt das polymere Bindemittel eingearbeitet und die so erhaltene Elektrodenmasse auf das Trägersubstrat aufgebracht wird.

## Claims

1. Negative electrode for high energy lithium ion batteries consisting of an electrode composition containing a lithium intercalation compound, a conductive agent and a polymeric binder on a metallic support substrate, **characterised in that** the electrode composition contains a latex additive based on a acrylic acid derivative copolymer and a polymer binder containing butadiene units.

2. The negative electrode according to claim 1, wherein the electrode composition contains a latex based on a copolymer of vinyl pyrrolidole with natriummethacrylate and a styrene-butadiene copolymer as polymer binder.

3. The negative electrode according to claim 1, wherein the electrode composition contains a latex based on a partially saponified copolymer of vinyl acetate with an acrylate and a styrene-butadiene copolymer as polymer binder.

4. The negative electrode according to claim 1, wherein the electrode composition contains a latex based on a partially saponified copolymer of vinyl acetate with a methylmethacrylate and a butadiene oil as polymer binder.

5. The negative electrode according to claim 4, wherein the vinyl content in the binder is below 25 mol%.

6. The negative electrode according to claim 1 to 5, wherein the electrode composition contains from 2 to 5 % by weight of polymer binder from 0.5 to 2 % by weight of latex additive and from 2 to 6 % by weight of conductive agent, the reminder being lithium intercalation compound.

7. The negative electrode according to any one of claims 1 to 6, wherein the metallic support substrate is a copper foil, a perforative copper sheet or a copper expanded metal.

8. The negative electrode according to any one of claims 1 to 7, wherein the lithium intercalation compound is a graphite.

9. The negative electrode according to claim 8, wherein the graphite contains from 5 to 15 % by weight of a carbon fibre having a length of from 0.1 to 1 mm in a diameter of from 1 to 20 µm.

10. The negative electrode according to any one of claims 1 to 9, wherein the mass ratio of graphite and carbon black is from 1000 : 1 to 1:1, preferably from 50 : 1 to 25:1.

11. A process for the conduction of a negative electrode according to any one of claims 1 to 10, wherein the carbon black is homogenised with the latex additive, is dispersed in a solvent and mixed with the graphite, and is stirred to form a homogeneous composition, and in that a polymer binder is not incorporated and the electrode composition thus obtained is applied on the support substrate until the final stage.

## Revendications

1. Electrode négative pour des cellules à ion lithium de forte énergie consistant en un composé consistant en une masse d'électrode renfermant un composé intercalant du lithium, un agent conducteur et un ion polymère, sur un substrat support métallique,
**caractérisée en ce que**
la masse d'électrode renferme un additif de latex à base d'un co-polymère dérivé de l'acide acrylique et un liant polymère contenant des unités butadiène.

2. Electrode négative selon la revendication 1,
**caractérisée en ce que**
la masse d'électrode renferme un latex à base d'un co-polymère de vinyl-pyrrolidone et de méthacrylate de sodium et un co-polymère styrène butadiène en tant que liant polymère.

3. Electrode négative selon la revendication 1,
**caractérisée en ce que**
la masse d'électrode renferme un latex à base d'un co-polymère partiellement saponifié d'acétate de vinyle et d'un ester d'acide acrylique, et un co-polymère styrène butadiène en tant que liant polymère.

4. Electrode négative selon la revendication 1,
**caractérisée en ce que**
la masse d'électrode renferme un latex à base d'un co-polymère partiellement saponifié d'acétate de vinyle et de méthacrylate de méthyle et une huile de butadiène en tant que liant polymère.

5. Electrode négative selon la revendication 4,
**caractérisée en ce que**
la fraction vinylique dans le liant est inférieure à 25 % en mole.

6. Electrode négative selon l'une des revendications 1 à 5,
**caractérisée en ce que**
la masse d'électrode renferme 2 à 5 % en poids de liant polymère, 0,5 à 2 % en poids d'additif de latex, 2 à 6 % en poids d'agent conducteur, la fraction restante étant constituée par le composé intercalant du lithium.

7. Electrode négative selon l'une des revendications 1 à 6,
**caractérisée en ce que**
le substrat support métallique est une feuille de cuivre, une tôle de cuivre perforée ou du cuivre étiré.

8. Electrode négative selon au moins l'une des revendications 1 à 7,
**caractérisée en ce que**
le composé d'intercalant du lithium est un graphite.

9. Electrode négative selon la revendication 8,
**caractérisée en ce que**
le graphite renferme 5 à 15 % en poids de fibres de carbone ayant 0,1 à 1 mm de longueur et 1 à 20 ?m de diamètre.

10. Electrode négative selon au moins l'une des revendications 1 à 9,
**caractérisée en ce que**
le rapport massique graphite/noir de carbone est de 1 000 : 1 à 1 : 1 de préférence de 50 : 1 à 25 : 1.

11. Procédé d'obtention d'une électrode négative selon au moins l'une des revendications 1 à 10,
**caractérisé en ce que**
l'on homogénéise le noir de carbone avec l'additif de latex, on disperse ce mélange dans un solvant, on lui ajoute du graphite et on l'agite pour obtenir une masse homogène, puis dans une dernière étape, on incorpore le liant polymère et on applique la masse d'électrode ainsi obtenue sur le substrat support.
